# EUROPÄISCHE PATENTSCHRIFT

(11) **EP 2 730 844 B1**
(45) Veröffentlichungstag und Bekanntmachung des Hinweises auf die Patenterteilung: **18.04.2018**
(21) Anmeldenummer: 13191946.6
(22) Anmeldetag: 07.11.2013
(51) Int. Cl.: F23M 5/02, F23R 3/00, F23R 3/06

(54) **Brennkammerschindel einer Gasturbine sowie Verfahren zu deren Herstellung**
Combustion chamber shingle of a gas turbine and method for its manufacturing
Bardeau de chambre de combustion d'une turbine à gaz et son procédé de fabrication

(30) Priorität: 13.11.2012 DE 102012022259
(43) Veröffentlichungstag der Anmeldung: 14.05.2014
(73) Patentinhaber: Rolls-Royce Deutschland Ltd & Co KG, 15827 Blankenfelde-Mahlow (DE)
(72) Erfinder: Clemen,, Carsten, Dr., 15749 Mittenwalde (DE)
(74) Vertreter: Hoefer & Partner Patentanwälte mbB

(56) Entgegenhaltungen:
- EP-A1- 0 481 885
- EP-A2- 2 856 036
- GB-A- 2 113 377
- GB-A- 2 444 736
- US-A- 4 622 821

## Beschreibung

Die Erfindung bezieht sich auf Gasturbinenbrennkammern mit Brennkammerschindeln, wobei die Brennkammerschindeln an einer tragenden Struktur der Brennkammeraußenwände befestigt sind.

Die Brennkammerschindeln weisen eine beliebige (sehr hohe, oftmals mehrere Tausend) Anzahl von Effusionskühllöchern auf der zur Brennkammer gerichteten Seite auf. Diese Effusionskühllöcher dienen dazu, die Schindel gegenüber den hohen Temperaturen in der Brennkammer zu kühlen. Darüber hinaus befindet sich auf der Brennkammerschindel mindestens ein Mischluftloch, das dazu dient, Luft aus dem die Brennkammer außen umgebenden Raum (Ringkanal/Annulus) in die Brennkammer zum Zwecke des Abkühlens und Abmagerns der Verbrennung und damit der Reduktion der NOx Entstehung in die Brennkammer zu leiten. Neben der Kühlung durch die Effusionskühllöcher sind die Schindeln häufig noch mit einer keramischen Beschichtung versehen, die als Dämmschicht gegen die hohen Temperaturen in der Brennkammer wirkt.

Diese Anordnung ist aus dem Stand der Technik bekannt, siehe EP 972 992 B1 oder DE 102 14 570 A1.

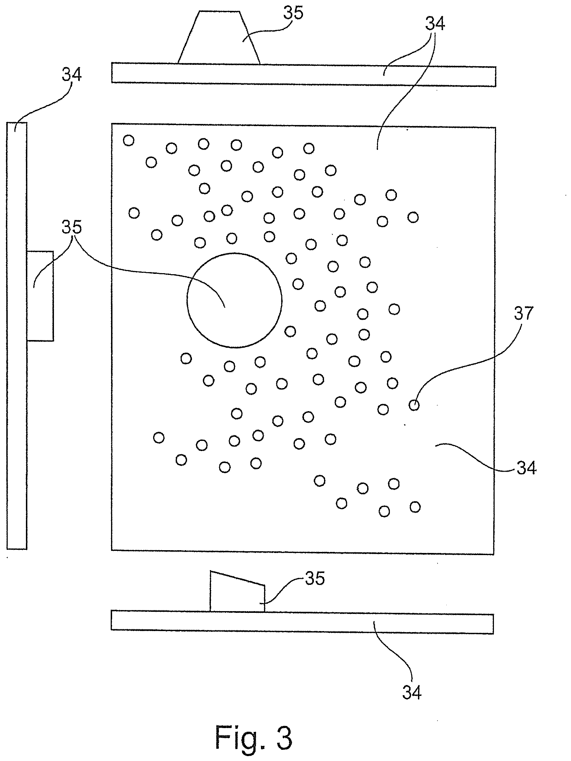

Die Ausbildung dieser Zumischlöcher erfolgt meist so, dass das Zumischloch konstruktiv wie ein Trichter oder ein Rohr, das in die Brennkammer hineinragt, ausgebildet ist und somit ein Strömungsleitelement bildet (Fig. 3).

Die Herstellung solcher Schindeln erfolgt üblicherweise entweder durch Gießen, Beschichten mit einer keramischen Schicht und Bohren der Effusionskühllöcher (z.B. mit Laser) oder durch Gießen, Bohren und Beschichten oder durch additive Fertigungsverfahren wie z.B. Selective Laser Sintering, Direct Laser Depositioning oder mittels Elektronenstrahlauftragsschweißen. Bei den additiven Verfahren werden dabei die Effusionskühllöcher direkt in die Schindel eingebracht und das aufwändige Bohren entfällt.

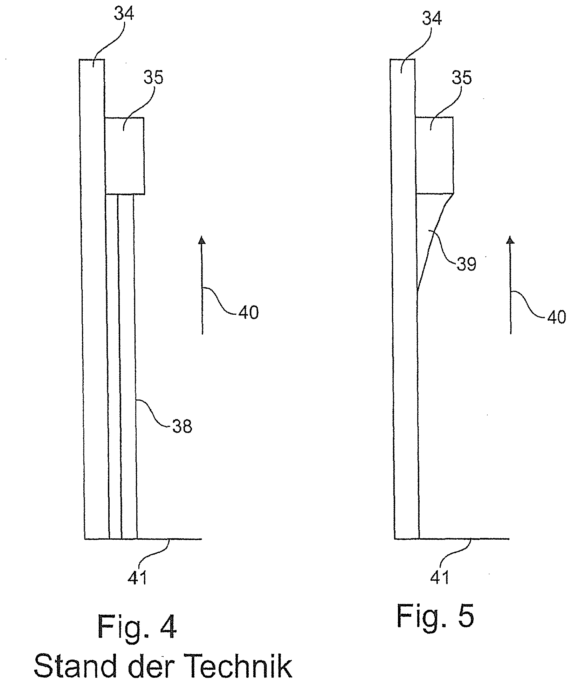

Bei der Herstellung der Schindel mit Zumischlöchern, die aus der Schindel hervorstehen, wie in Fig. 4 gezeigt, mit den additiven Verfahren, wird bei der (vertikalen) Anordnung der Schindeln in der Fertigungsmaschine eine Hilfskonstruktion benötigt, um ein Absacken der Zumischlochgeometrie nach unten während des Fertigungsprozesses zu verhindern.

Eine solche Unterkonstruktion hat wesentliche Nachteile. Sie ist a) materialintensiv, b) sie verlängert den Fertigungsprozess und c) sie muss nach der Fertigung von der Schindel entfernt werden. Dies ist sehr kostenintensiv. Um dies zu umgehen wird häufig eine horizontale Fertigung gewählt, die den Nachteil hat, dass weniger Bauteile in einem Fertigungsvorgang hergestellt werden können, was zu wesentlich höheren Kosten pro Bauteil führt. Eine weitere Alternative wäre das Aufbringen der in die Brennkammer hineinragenden Zumischlochgeometrie in einem weiteren Schritt, auch dies ist mit Kosten verbunden.

Aus der US 4 622 821 A ist der Aufbau einer Brennkammerwand bekannt, welche einzelne zylindrische oder konische Wandungselemente aufweist. Es sind keine Brennkammerschindeln vorgesehen. Die Brennkammerwand weist Mischluftlöcher auf, durch welche Verbrennungsluft zugeführt wird. Weiterhin sind Prallkühllöcher vorgesehen. Den Prallkühllöchern sind Lippen zugeordnet, welche die austretende Strömung in Umfangsrichtung begrenzen.

Der Erfindung liegt die Aufgabe zugrunde, eine Brennkammerschindel einer Gasturbine der eingangs genannten Art zu schaffen, welche bei einfachem Aufbau und einfacher, kostengünstiger Herstellbarkeit die Nachteile des Standes der Technik vermeidet. Weiterhin ist es Aufgabe der Erfindung, ein geeignetes Herstellungsverfahren für eine derartige Brennkammerschindel zu schaffen.

Erfindungsgemäß wird die Aufgabe durch die Merkmalskombinationen der nebengeordneten Ansprüche gelöst, die jeweiligen Unteransprüche zeigen weitere vorteilhafte Ausgestaltungen der Erfindung.

Erfindungsgemäß ist somit vorgesehen, dass die Brennkammerschindel zumindest ein Stützelement aufweist, welches das Mischluftloch bzw. das dort vorgesehene Strömungsleitelement (chute) bei einer vertikalen Fertigung abstützt. Das Stützelement ist dabei bevorzugterweise an einer Seite des Mischluftlochs vorgesehen, welche hinsichtlich der Strömung entlang der Brennkammerschindeln/Oberfläche an der strömungsabgewandten Seite angeordnet ist.

Erfindungsgemäß ist vorgesehen, dass das Stützelement als Rippe ausgebildet ist, deren Länge und/oder Dicke jedoch in günstiger Ausgestaltung von der Größe und dem Durchmesser des Mischluftlochs bzw.
des zugeordneten Strömungsleitelements abhängt. Erfindungsgemäß ist auch die Anzahl der Rippen beliebig, ebenso ihre konkrete konstruktive Ausgestaltung, die beispielsweise strömungsoptimiert sein kann.

Erfindungsgemäß wird die Brennkammerschindel, wie erwähnt, in vertikaler Anordnung mittels eines additiven Fertigungsverfahrens, so wie dies aus dem Stand der Technik bekannt ist, gefertigt. Das Stützelement ist erfindungsgemäß auf der in der Fertigung nach unten gerichteten Seite des Zumischlochs angeordnet, um bei der additiven Fertigung, bei welcher schichtweise Material aufgebracht wird, das Strömungsleitelement (chute) abzustützen und auf diese Weise zu verhindern, dass dieses während der Fertigung nach unten knickt oder nach unten deformiert wird.

Um die Strömung entlang der fertiggestellten Brennkammerschindel zu optimieren, ist es besonders günstig, wenn das Stützelement ausschließlich auf der der Strömung abgewandten Seite des Mischluftlochs bzw. des Strömungsleitelements angeordnet ist.

Besonders günstig ist es, wenn das Stützelement mit Effusionskühllöchern versehen ist, um eine gute Kühlung der Brennkammerschindeln beim Betrieb zu gewährleisten.

Hinsichtlich der Ausgestaltung und Dimensionierung des bevorzugterweise rippenförmig ausgebildeten Stützelements ist erfindungsgemäß vorgesehen, dass das Stützelement kleiner oder gleich dem Durchmesser des Mischluftlochs oder des Strömungsleitelements ausgebildet ist.

Erfindungsgemäß kann es günstig sein, das Mischluftloch nach der additiven Aufbringung des Materials mittels einer kalibrierenden Bohrung auszubohren.

Erfindungsgemäß ist es weiterhin möglich, das Stützelement nach der Fertigstellung des Mischluftlochs und/oder des Strömungsleitelements wieder zu entfernen, beispielsweise durch Abschleifen.

Die Erfindung ermöglicht somit die Herstellung einer Brennkammerschindel mit in die Brennkammerschindel integriertem Mischluftloch bzw. Strömungsleitelement mit additiven Verfahren in vertikaler Anordnung der Brennkammerschindel, wodurch sich eine signifikante Kostenreduktion gegenüber einer horizontalen Herstellung ermöglichen lässt. Das Einsparpotential kann bis zu 50% betragen.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine schematische Seitenansicht (im Schnitt) einer Brennkammer gemäß dem Stand der Technik,
- Fig. 3: Ansichten einer Brennkammerschindel gemäß dem Stand der Technik in Draufsicht sowie verschiedenen Seitenansichten,
- Fig. 4: eine Seitenansicht einer Herstellungsanordnung gemäß dem Stand der Technik,
- Fig. 5: eine Seitenansicht, analog Fig. 4, der erfindungsgemäßen Ausgestaltung der Herstellung gemäß einem ersten Ausführungsbeispiel,
- Fig. 6: ein Ausführungsbeispiel einer erfindungsgemäßen Brennkammerschindel in Draufsicht und Seitenansicht,
- Fig. 7: eine Seitenansicht eines weiteren Ausführungsbeispiels der Erfindung,
- Fig. 8: ein weiteres Ausführungsbeispiel einer erfindungsgemäßen Brennkammerschindel analog der Darstellung der Fig. 6 in Draufsicht und Seitenansicht, und
- Fig. 9: eine Seitenansicht, analog Fig. 7, eines weiteren Ausführungsbeispiels der Erfindung.

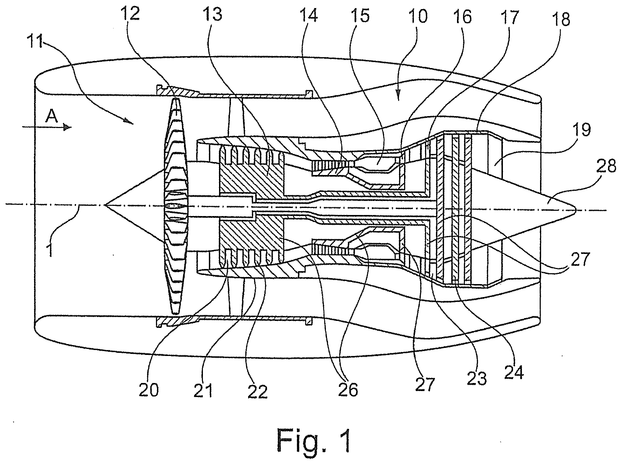

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, Brennkammern 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

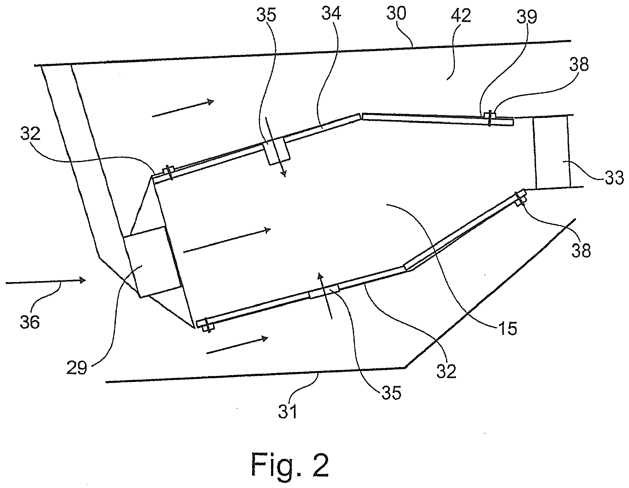

Die Fig. 2 zeigt schematisch eine Brennkammer 15. Die Brennkammer 15 umfasst eine Treibstoffdüse 29, welche in üblicher Weise an einem Brennkammerkopf gehaltert ist. Weiterhin sind ein Brennkammeraußengehäuse 30 sowie ein Brennkammerinnengehäuse 31 vorgesehen. Eine Brennkammerwand 32 umschließt die eigentliche Brennkammer 15 und trägt Brennkammerschindeln 34. Das Bezugszeichen 33 zeigt schematisch eine Turbinenvorleitreihe. Durch Zumischlöcher 35 wird in üblicher Weise Luft zugeführt. Die Zuströmrichtung ist mit dem Bezugszeichen 36 bezeichnet.

Fig. 3 zeigt eine aus dem Stand der Technik bekannte Brennkammerschindel 34 in Draufsicht sowie verschiedene Seitenansichten. Hierbei ist insbesondere zu sehen, dass das Mischluftloch 35 mit einem rohrförmig vorstehenden Strömungsleitelement versehen ist. Zusätzlich weist die Brennkammerschindel 34 eine Vielzahl von Effusionskühllöchern 37 auf. Das Strömungsleitelement 35 ist im Wesentlichen rohrförmig ausgebildet und hinsichtlich seiner Kontur strömungsoptimiert abgeschrägt.

Die Fig. 4 zeigt eine Seitenansicht einer aus dem Stand der Technik bekannten Herstellanordnung, bei welcher eine Brennkammerschindel 34 vertikal mittels additiven Verfahren hergestellt wird, beispielsweise Selective Laser Sintering, Direct Laser Depositioning oder mittels Elektronenstrahlauftragsschweißen. Die Effusionskühllöcher 37 können dabei direkt in die Brennkammerschindel 34 eingebracht werden, so dass ein nachträgliches Bohren nicht erforderlich ist. Die Fig. 4 zeigt ein Maschinenbett 41, auf welchem die Brennkammerschindel 34 vertikal angeordnet ist. Um eine Ausbildung des Strömungsleitelements 35 zu ermöglichen, ist eine zusätzliche Unterkonstruktion 38 erforderlich, die zusätzlich vorgesehen werden muss, beispielsweise in Form eines Stützbalkens oder ähnlichem. Die Unterkonstruktion 38 stört das additive Herstellungsverfahren, bringt zusätzliche Kosten mit sich und stellt ein zusätzliches Hilfsbauteil dar, welches separat gehandhabt werden muss.

Die Fig. 5 zeigt eine erfindungsgemäße Ausgestaltung, analog Fig. 4, aus welcher ersichtlich ist, dass die Abstützung des Strömungsleitelements 35 mit dem Zumischloch mittels zumindest eines rippenartigen Stützelements 39 erfolgt, welches zuerst erzeugt werden kann (Fertigungsrichtung 40) und welches die nachfolgende Herstellung des Strömungsleitelements 35 abstützt. Hierdurch ergibt sich bei den im additiven Verfahren gebildeten dünnen Wandstärken eine ausreichende Stabilität des Strömungsleitelements 35 während der Herstellung.

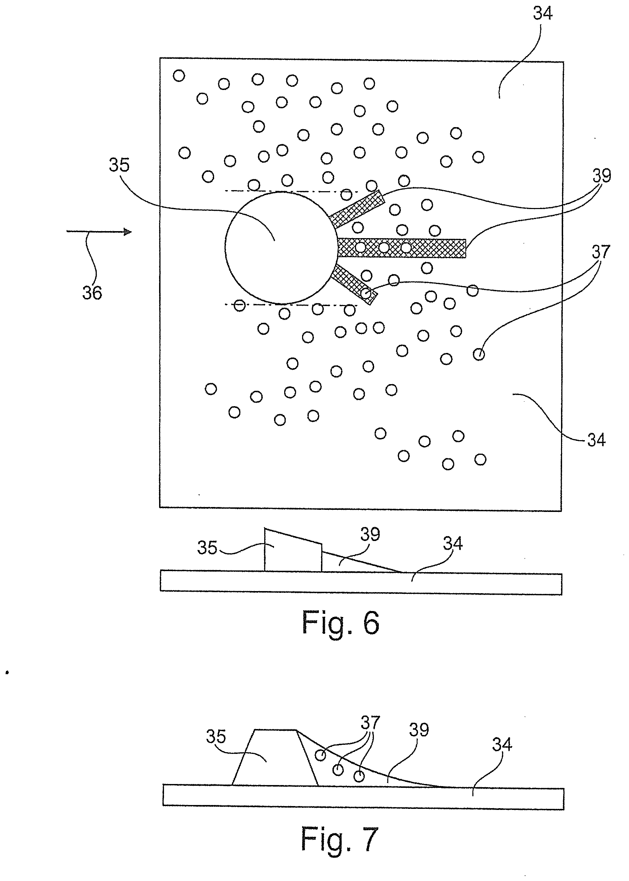

Die Fig. 6 zeigt ein Ausführungsbeispiel einer erfindungsgemäßen Brennkammerschindel 34, welche mit drei rippenförmigen Stützelementen 39 versehen ist. Diese sind auf der der Zuströmrichtung 36 abgewandten Seite des Mischluftlochs 35 vorgesehen und weisen jeweils eine geringe Breite auf. Die Breite ist so bemessen, dass in den Stützelementen 39 Effusionskühllöcher 37 ausgebildet werden können.

Die Fig. 7 zeigt eine Seitenansicht, bei welcher das Stützelement 39 nicht, wie in Fig. 6 gezeigt, keilförmig ausgebildet ist, sondern eine Abrundung aufweist und zusätzlich mit Effusionskühllöchern 37 versehen ist, welche das Stützelement 39 seitlich durchdringen.

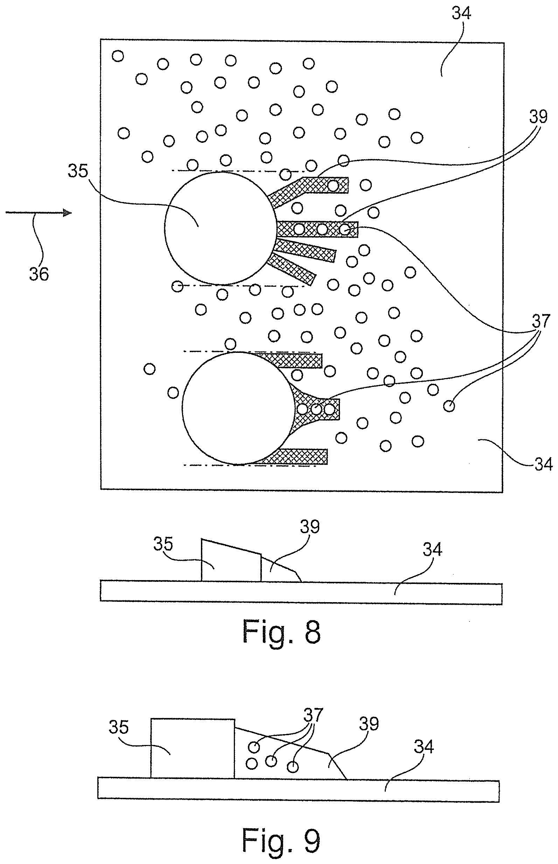

Die Fig. 8 und 9 zeigen alternative Ausgestaltungen mit mehreren Stützelementen 39, welche unterschiedlich dimensioniert und angeordnet sind und ebenfalls mit Effusionskühllöchern 37 versehen sind.

### Bezugszeichenliste:

- 1: Triebwerksachse
- 10: Gasturbinentriebwerk
- 11: Lufteinlass
- 12: im Gehäuse umlaufender Fan
- 13: Mitteldruckkompressor
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Treibstoffdüse
- 30: Brennkammeraußengehäuse
- 31: Brennkammerinnengehäuse
- 32: Brennkammerwand
- 33: Turbinenvorleitreihe
- 34: Brennkammerschindel
- 35: Strömungsleitelement mit Zumischloch
- 36: Zuströmrichtung
- 37: Effusionskühlloch
- 38: Unterkonstruktion
- 39: Rippe/Stützelement
- 40: Fertigungsrichtung
- 41: Maschinenbett
- 42: Ringkanal/Annulus

## Patentansprüche

1. Brennkammerschindel einer Gasturbine, wobei die Brennkammerschindel (34) eine Vielzahl von Effusionskühllöchern (37) aufweist und mit einem Mischluftloch versehen ist, welches als Strömungsleitelement (35) ausgebildet ist und über die Oberfläche der Brennkammerschindel (34) vorsteht, **dadurch gekennzeichnet, dass** auf der einer Strömung entlang der Brennkammerschindel (34) abgewandten Seite des Strömungsleitelements (35) zumindest ein Stützelement (39) in Form einer Rippe an der Brennkammerschindel (34) und an dem Strömungsleitelement (35) angeordnet ist.

2. Brennkammerschindel nach Anspruch 1, **dadurch gekennzeichnet, dass** das Stützelement (39) mit zumindest einem Effusionskühlloch (37) versehen ist.

3. Brennkammerschindel nach einem der Ansprüche 1 oder 2, **dadurch gekennzeichnet, dass** das Stützelement (39) eine Breite aufweist, welche kleiner oder gleich dem Durchmesser des Strömungsleitelements (35) ist.

4. Verfahren zur Herstellung einer Brennkammerschindel (34) einer Gasturbine nach einem der Ansprüche 1 bis 3 mit folgenden Arbeitsschritten mittels eines additiven Herstellungsverfahrens:
- Herstellen einer Brennkammerschindel (34) in vertikaler Anordnung,
- Aufbringen zumindest eines Stützelements (39) auf einer Seite der Brennkammerschindel,
- Aufbringen zumindest eines Mischluftlochs bzw. eines zugeordneten Strömungsleitelements (35), und
- gleichzeitiges oder nachträgliches Ausbilden von Effusionskühllöchern (37) in der Brennkammerschindel (34) und/oder dem Stützelement (39).

5. Verfahren nach Anspruch 4, **dadurch gekennzeichnet, dass** das Mischluftloch (35) mittels einer Kalibrierbohrung bearbeitet wird.

6. Verfahren nach einem der Ansprüche 4 oder 5, **dadurch gekennzeichnet, dass** das Aufbringen des Stützelements (39) und des Strömungsleitelements (35) gleichzeitig erfolgen.

7. Verfahren nach einem der Ansprüche 4 oder 5, **dadurch gekennzeichnet, dass** das Aufbringen des Stützelements (39) vor dem Aufbringen des Strömungsleitelements (35) erfolgt.

8. Verfahren nach einem der Ansprüche 4 bis 7, **dadurch gekennzeichnet, dass** das Stützelement (39) nach der Fertigung des Strömungsleitelements (35) entfernt wird.

## Claims

1. Combustion chamber tile of a gas turbine, where the combustion chamber tile (34) has a plurality of effusion cooling holes (37) and is provided with a mixing air hole (35) designed as a flow-guiding element (35) and projecting over the surface of the combustion chamber tile (34), **characterized in that** on the side of the flow-guiding element (35) facing away from a flow along the combustion chamber tile (34) at least one supporting element (39) is arranged in the form of a rib on the combustion chamber tile (34) and on the flow-guiding element (35).

2. Combustion chamber tile in accordance with Claim 1, **characterized in that** the supporting element (39) is provided with at least one effusion cooling hole (37).

3. Combustion chamber tile in accordance with one of the Claims 1 or 2, **characterized in that** the supporting element (39) has a width which is less than or equal to the diameter of the flow-guiding element (35).

4. Method for manufacturing a combustion chamber tile (34) of a gas turbine in accordance with one of the Claims 1 to 3, by means of an additive manufacturing method, having the following process steps:
- Manufacturing a combustion chamber tile (34) in vertical arrangement,
- Providing at least one supporting element (39) on a side of the combustion chamber tile,
- Providing at least one mixing air hole or assigned flow-guiding element (35), and
- Making effusion cooling holes (37) simultaneously or subsequently in the combustion chamber tile (34) and/ or the supporting element (39).

5. Method in accordance with Claim 4, **characterized in that** the mixing air hole (35) is machined by means of a calibration drilling operation.

6. Method in accordance with one of the Claims 4 or 5, **characterized in that** the supporting element (39) and the flow-guiding element (35) are provided at the same time.

7. Method in accordance with one of the Claims 4 or 5, **characterized in that** the supporting element (39) is provided prior to the provision of the flow-guiding element (35).

8. Method in accordance with one of the Claims 4 to 7, **characterized in that** the supporting element (39) is removed after fabrication of the flow-guiding element (35).

## Revendications

1. Bardeau de chambre de combustion d'une turbine à gaz, sachant que le bardeau de chambre de combustion (34) présente une multitude de trous de refroidissement par effusion (37) et est pourvu d'un trou de mélange d'air qui est conçu sous forme d'élément de guidage de flux (35) et qui est en saillie sur la surface du bardeau de chambre de combustion (34), **caractérisé en ce que** sur le côté de l'élément de guidage de flux (35), opposé à un flux le long du bardeau de chambre de combustion (34), au moins un élément d'appui (39) en forme de nervure est disposé sur le bardeau de chambre de combustion (34) et sur l'élément de guidage de flux (35).

2. Bardeau de chambre de combustion selon la revendication n° 1, **caractérisé en ce que** l'élément d'appui (39) est pourvu d'au moins un trou de refroidissement par effusion (37).

3. Bardeau de chambre de combustion selon une des revendications n° 1 ou n° 2, **caractérisé en ce que** l'élément d'appui (39) présente une largeur qui est inférieure ou égale au diamètre de l'élément de guidage de flux (35).

4. Procédé de fabrication d'un bardeau de chambre de combustion (34) d'une turbine à gaz selon une des revendications n° 1 à n° 3, comprenant les opérations suivantes au moyen d'un procédé de fabrication additive:
- fabrication d'un bardeau de chambre de combustion (34) en disposition verticale,
- pose d'au moins un élément d'appui (39) sur un côté du bardeau de chambre de combustion,
- pose d'au moins un trou de mélange d'air ou d'un élément de guidage de flux (35) associé, et
- formation simultanée ou consécutive de trous de refroidissement par effusion (37) dans le bardeau de chambre de combustion (34) et/ ou l'élément d'appui (39).

5. Procédé selon la revendication n° 4, **caractérisé en ce que** le trou de mélange d'air (35) est usiné au moyen d'un alésage de calibrage.

6. Procédé selon une des revendications n° 4 ou n° 5, **caractérisé en ce que** la pose de l'élément d'appui (39) et la pose de l'élément de guidage de flux (35) ont lieu simultanément.

7. Procédé selon une des revendications n° 4 ou n° 5, **caractérisé en ce que** la pose de l'élément d'appui (39) a lieu avant la pose de l'élément de guidage de flux (35).

8. Procédé selon une des revendications n° 4 à n° 7, **caractérisé en ce que** l'élément d'appui (39) est retiré après la fabrication de l'élément de guidage de flux (35).
